# FASCICULE DE BREVET EUROPEEN

(11) **EP 2 466 318 B1**
(45) Date de publication et mention de la délivrance du brevet: **06.05.2015**
(21) Numéro de dépôt: 11191049.3
(22) Date de dépôt: 29.11.2011
(51) Int. Cl.: G01P 5/24, G01S 11/14

(54) **Dispositif de mesure par onde acoustique comprenant un dispositif de chauffage par induction et procédé de chauffage associé**
Messvorrichtung zur Messung mittels Schallwellen, die eine Induktionsheizvorrichtung umfasst, und entsprechendes Heizverfahren
Measurement device by acoustic waves including an induction heating device and related heating method

(30) Priorité: 15.12.2010 FR 1060536
(43) Date de publication de la demande: 20.06.2012
(73) Titulaire: Pulsonic, 91400 Orsay (FR)
(72) Inventeur: Collet, Gérard, 91440 BURES SUR YVETTE (FR); Zhan, Francis, 92130 ISSY LES MOULINEAUX (FR); Grandidier, Eric, 92160 ANTONY (FR)
(74) Mandataire: Pontet Allano & Associes

(56) Documents cités:
- EP-A1- 2 072 973
- US-A- 3 019 647
- US-A- 4 262 545
- US-A- 5 343 744

## Description

### Domaine technique

La présente invention concerne un dispositif de mesure par onde acoustique comprenant un dispositif de chauffage.

Elle concerne aussi un procédé de chauffage mettant en oeuvre un tel dispositif.

### Etat de la technique antérieure

Le principe de la mesure par onde acoustique pour la caractérisation d'un flux est connu depuis les années 1960. Ce principe est notamment présenté dans l'article scientifique: Cruette, D., A. Marillier, J. L. Dufresne, et J. Y. Grandpeix, 2000: Fast temperature and true airspeed measurements with the airborne ultrasonic anemometer thermometer. American Meteorological society, 1021-1039.

Contrairement aux dispositifs mécaniques classiques, tels que les anémomètres à coupelles ou à hélice, ces dispositifs n'ont pas de pièce mobile. Comparativement aux dispositifs mécaniques, les dispositifs à ultrasons ne nécessitent pratiquement aucun entretien et ont une durée de vie supérieure. Les dispositifs de mesure par ultrasons sont donc tout particulièrement adaptés pour être placés dans les endroits difficiles d'accès ou isolés.

Les dispositifs de mesure mettant en oeuvre ce principe de mesure sont capables de fournir des mesures fiables quelles que soient les conditions climatiques auxquelles ils sont exposés. Or, dans certaines conditions, du givre et/ou de la glace et/ou de la neige est susceptible de se former et/ou de s'accumuler sur les transducteurs sous forme de concrétions. Ces concrétions affectent le temps de propagation des ondes qui les traversent et/ou perturbent l'écoulement du flux entre les transducteurs. Ces concrétions dégradent donc la fiabilité de la mesure.

On connait des dispositifs de chauffage des transducteurs permettant d'éviter la formation de concrétions et/ou permettant de faire fondre les concrétions sur les transducteurs. Ces dispositifs de chauffage consistent en une cartouche chauffante, ou une bobine de fil chauffant, placée dans ou à proximité immédiate des transducteurs. Un exemple d'un tel art antérieur est décrit dans le document US 5 343 744.

Toutefois ces dispositifs ne permettent d'éviter la formation de concrétions qu'au niveau des transducteurs et non sur l'ensemble du dispositif de mesure. Des concrétions sont alors susceptibles de se former sur le reste du dispositif de mesure. Ces concrétions constituent une surépaisseur qui engendre des perturbations aérodynamiques qui dégradent la fiabilité de la mesure. Dans certains cas la quantité de concrétions accumulée est telle que des concrétions se trouvent entre deux transducteurs, affectant alors fortement la propagation des ondes et l'écoulement du flux.

De plus, les concrétions qui se forment sont susceptibles de rendre inopérants les dispositifs de protection empêchant les oiseaux de se poser sur le dispositif de mesure. En particulier, les concrétions peuvent constituer une surface permettant aux oiseaux de se poser sur le dispositif de mesure, et dégrader la fiabilité de la mesure par perturbation aérodynamique ou en affectant la propagation des ondes. En outre, certains oiseaux dégradent les transducteurs, notamment en picorant lesdits transducteurs.

On connait des dispositifs de chauffage utilisant des cordons chauffants pour chauffer le dispositif de mesure pour éviter la formation de concrétions. Ces cordons chauffants sont composés de fils résistifs enrobés.

Tant les cartouches chauffantes que les cordons chauffants sont des systèmes de chauffage résistifs. Ils ont pour inconvénient une température de surface élevée pouvant endommager les composants électriques du dispositif de mesure. Ils ont pour autre inconvénient de nécessiter un couplage thermique par l'intermédiaire d'une substance thermoconductrice. Outre le surcoût de cette substance, sa mise en oeuvre peut être difficile dans certaines parties du dispositif de mesure.

L'encombrement des systèmes de chauffage résistifs les rend difficiles à loger à l'intérieur du dispositif de mesure. L'augmentation des dimensions du dispositif de mesure nécessaire pour loger les systèmes de chauffage résistifs augmente les perturbations aérodynamiques.

Les cartouches chauffantes possèdent une zone non chauffée en bout de cartouche, appelée zone morte. Cette zone morte est très pénalisante car le dispositif de mesure, et en particulier les transducteurs, n'est pas chauffé dans cette zone.

Plusieurs cartouches sont nécessaires pour chauffer correctement le dispositif de mesure, ce qui entraine un usinage plus compliqué.

On connaît également le document EP 2 072 973 qui décrit un débitmètre dans lequel une partie du flux passe par un sous passage dans lequel se trouve une sonde. Pour éviter l'encrassement de ce sous passage, on utilise des moyens de chauffage par induction.

On connaît enfin le document US 3 019 647 qui décrit un débitmètre dans lequel on chauffe le fluide par intermittence, et on détecte les variations de température de fluide pour en déduire un débit. Le chauffage est par exemple réalisé par induction.

Un but de la présente invention est de proposer un procédé et dispositif de chauffage qui ne présente pas les défauts des dispositifs de chauffage existants.

Un autre but de l'invention est de proposer un dispositif de mesure par onde acoustique comprenant un dispositif de chauffage plus efficace que les dispositifs de l'état de la technique, tout en limitant les risques de surchauffe.

### Exposé de l'invention

L'invention permet d'atteindre ce but avec un dispositif de mesure par onde acoustique qui comprend un dispositif de chauffage par induction.

Le dispositif de chauffage par induction peut être mis en oeuvre à tout niveau du dispositif de mesure où l'on souhaite éviter la formation de concrétions. De plus le chauffage par induction permet de générer une chaleur diffuse et sensiblement homogène dans l'ensemble de la pièce induite. Sa mise en oeuvre ne nécessite pas de substance thermoconductrice. Ainsi le chauffage par induction évite une température de surface élevée et permet de préserver les composants électriques du dispositif de mesure. De plus le chauffage par induction ne possède pas de zone morte, de sorte que le dispositif de chauffage permet de chauffer le dispositif de mesure de manière homogène.

Le dispositif de chauffage par induction compris dans le dispositif de mesure selon l'invention est peu encombrant. Il permet une mise en oeuvre sans augmentation des dimensions du dispositif de mesure.

De préférence le dispositif de chauffage compris dans le dispositif de mesure selon l'invention comprend au moins un inducteur de courant par magnétisme prévu pour être alimenté par au moins un générateur de courant alternatif.

L'utilisation de plusieurs inducteurs présente l'avantage de permettre le chauffage de zones distinctes du dispositif de mesure, et/ou de moduler la puissance de chauffage.

Selon un aspect important de l'invention au moins un des inducteurs est disposé sur au moins une partie d'une surface externe du dispositif de mesure.

Cette disposition présente l'avantage de disposer au moins une partie du dispositif de chauffage à l'extérieur d'une partie du dispositif de mesure. La surépaisseur d'un inducteur relativement au dispositif de mesure est généralement considérée comme négligeable, de sorte que les perturbations aérodynamiques sont sensiblement maintenues par rapport à un dispositif de mesure non équipé de dispositif de chauffage.

Cette disposition présente en outre l'avantage d'une grande facilité de mise en oeuvre.

Selon un autre aspect important de l'invention le dispositif de mesure comprend au moins un élément ferromagnétique autour duquel est disposé au moins un des inducteurs, l'ensemble constituant un élément chauffant.

L'élément chauffant ainsi constitué présente l'avantage de ne pas présenter de zone morte, contrairement aux cartouches chauffantes résistives.

Selon un aspect préférentiel de l'invention l'au moins un élément chauffant est disposé à l'intérieur d'une partie dudit dispositif de mesure.

L'invention permet alors de chauffer des parties amagnétiques du dispositif de mesure et/ou de remplacer certains dispositifs de chauffage résistifs. La production d'éléments chauffants distincts peut permettre une réduction des coûts de fabrication grâce à production en série d'éléments standardisés qui seront adaptés dans des dispositifs de mesure.

Avantageusement le dispositif de mesure comprend au moins un transducteur à l'intérieur duquel est disposé au moins un des éléments chauffants.

Le chauffage du transducteur permet d'éviter toute formation de concrétions qui dégraderaient la qualité de mesure. Les transducteurs étant amagnétiques, le chauffage par élément chauffant à l'intérieur du transducteur permet une température sensiblement homogène du transducteur, et d'éviter la surchauffe du transducteur.

Le dispositif de mesure selon l'invention peut également comprendre une pique à l'intérieur de laquelle est disposé au moins un élément chauffant.

Le chauffage de la pique permet à celle-ci de conserver la fonction de protection au regard des oiseaux quelles que soient les conditions météorologiques.

Selon un autre aspect de l'invention, le dispositif de mesure comprend un trident composé de trois dents et d'une pique solidaires d'un corps, une extrémité libre de chaque dent portant un transducteur.

Cette disposition présente l'avantage de minimiser les perturbations aérodynamiques des bras sur le dispositif de mesure quelle que soit l'orientation du vent.

Selon un aspect complémentaire de l'invention le trident est en un matériau ferromagnétique.

L'utilisation d'un matériau ferromagnétique pour le trident permet l'utilisation du trident comme induit dans le dispositif de chauffage. L'encombrement, la masse, et le coût du dispositif de mesure peuvent ainsi être réduits. Ce matériau ferromagnétique présente aussi l'avantage d'un échauffement supplémentaire dû aux pertes par hystérésis.

Selon un aspect supplémentaire de l'invention, le dispositif de chauffage comprend un dispositif de régulation incluant un dispositif de mesure de température et/ou un dispositif de mesure de la vitesse du flux. Le dispositif de régulation permet de réguler le chauffage selon les conditions climatiques, en particulier selon la température et/ou la vitesse du flux pour éviter la formation de concrétions sans surchauffer le dispositif de mesure.

Selon un autre aspect de l'invention, le dispositif de régulation comprend un appareil électronique et/ou un ordinateur. Il est ainsi possible de prédéfinir ou programmer la régulation de température, et/ou de modifier à distance le chauffage.

Dans une version particulière du dispositif selon l'invention, un des inducteurs est disposé sur chaque dent, et à l'intérieur de chaque transducteur et à l'intérieur de la tête est disposé un élément chauffant.

Ce mode de réalisation permet une mise en oeuvre facile et peu couteuse de l'invention pour un dispositif de mesure.

Dans une version particulière du dispositif selon l'invention, des éléments chauffants sont disposés à l'intérieur de chaque transducteur et à l'intérieur de chaque dent et à l'intérieur de la tête.

Ce mode de réalisation permet la mise en oeuvre de l'invention tout en protégeant les inducteurs des agressions extérieures.

L'invention propose également un procédé de chauffage d'un dispositif de mesure par onde acoustique dans lequel on chauffe par induction au moins une partie du dispositif de mesure pour faire fondre les concrétions.

Le chauffage par induction présente l'avantage d'une rapide montée en température.

Selon un aspect privilégié de l'invention la partie du dispositif est chauffée directement, par application d'un inducteur de courant par magnétisme directement sur le dispositif de mesure, et/ou indirectement, par chauffage d'un élément disposé à l'intérieur du dispositif de mesure.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue en perspective d'un mode de réalisation privilégié du dispositif selon l'invention;
- la figure 2 est une vue en coupe d'un transducteur équipé d'un élément chauffant selon l'invention; et
- la figure 3 est une vue en perspective d'un transducteur équipé d'un élément chauffant selon l'invention.

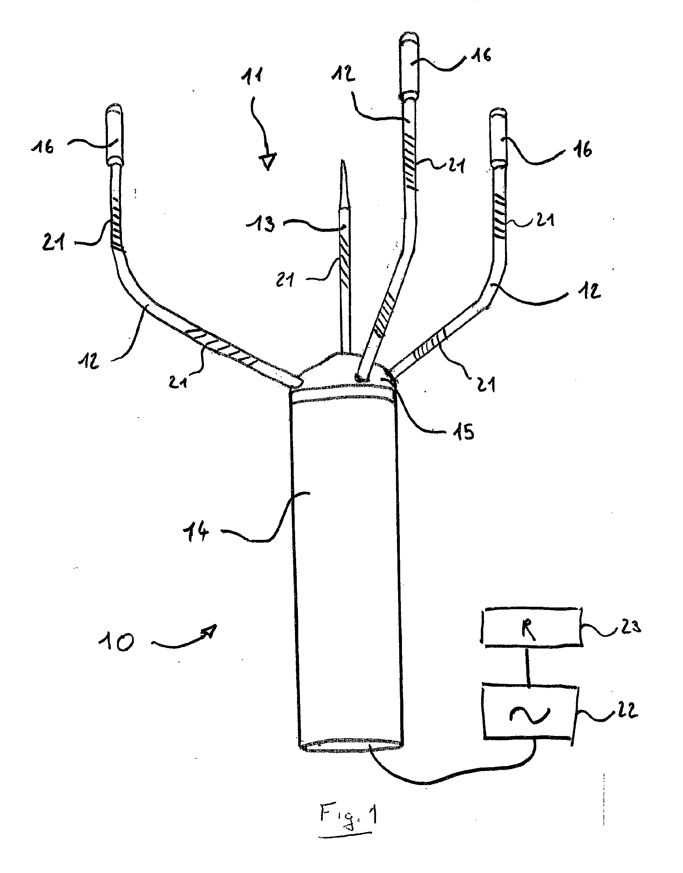

On va tout d'abord décrire, en référence à la figure 1, un dispositif de mesure comprenant un dispositif de chauffage par induction selon l'invention.

Le dispositif de mesure 10 de l'exemple représenté comprend un trident 11 composé de trois dents 12 et d'une pique 13 solidaires d'un corps 14, une extrémité libre de chaque dent portant un transducteur 16.

Dans un mode de réalisation privilégié de l'invention, le dispositif de chauffage comprend des inducteurs de courant par magnétisme 21 alimentés par un générateur de courant alternatif 22.

Au moins un des inducteurs 21 est disposé sur au moins une partie d'une surface externe du trident 11. La partie du trident 11 correspondant à ladite surface externe est choisie en matériau ferromagnétique. La variation de champ magnétique créé par l'inducteur 21 va alors induire des courants de Foucault dans la partie du trident 11 correspondant pour réaliser un chauffage direct du dispositif de mesure.

De préférence au moins un inducteur 21 est disposé sur chaque bras 12. Dans l'exemple de la figure 1, deux inducteurs 21 ont été disposés sur chaque bras. Les bras et/ou l'ensemble du trident sont en matériau ferromagnétique.

Les inducteurs 21 comprennent des fils conducteurs enroulés en spires autour du dispositif de mesure pour sensiblement former une bobine capable de générer un champ magnétique.

Des fils d'alimentation assurent l'alimentation électrique des inducteurs 21. Le dispositif de mesure comprend de préférence des trous permettant le passage des fils d'alimentation entre l'intérieur du dispositif de mesure et les inducteurs disposés à l'extérieur du dispositif de mesure. Complémentairement un joint d'étanchéité peut être réalisé, par exemple à l'aide de mastique ou de colle.

Dans un mode de réalisation privilégié, les fils d'alimentation sont disposés dans le dispositif de mesure. Les trous sont disposés à proximité des inducteurs 21 placés à la surface du dispositif de mesure. Complémentairement ou alternativement les fils d'alimentation peuvent être disposés à l'extérieur du dispositif de mesure, de préférence maintenus sur la surface externe du dispositif de mesure 10. Les fils d'alimentation sont disposés de manière à rester en dehors du volume compris entre les transducteurs 16 pour ne pas interférer avec le dispositif de mesure.

Un inducteur 21 est disposé sur la pique 13 pour éviter que des concrétions ne se forment à ce niveau du dispositif de mesure 10.

Le dispositif de chauffage comprend de préférence un dispositif de régulation 23 de la température de chauffage. Le dispositif de régulation 23 comprend un appareil électronique et/ou un ordinateur recevant les informations d'un dispositif de mesure de température et/ou un dispositif de mesure de la vitesse du flux (non représenté).

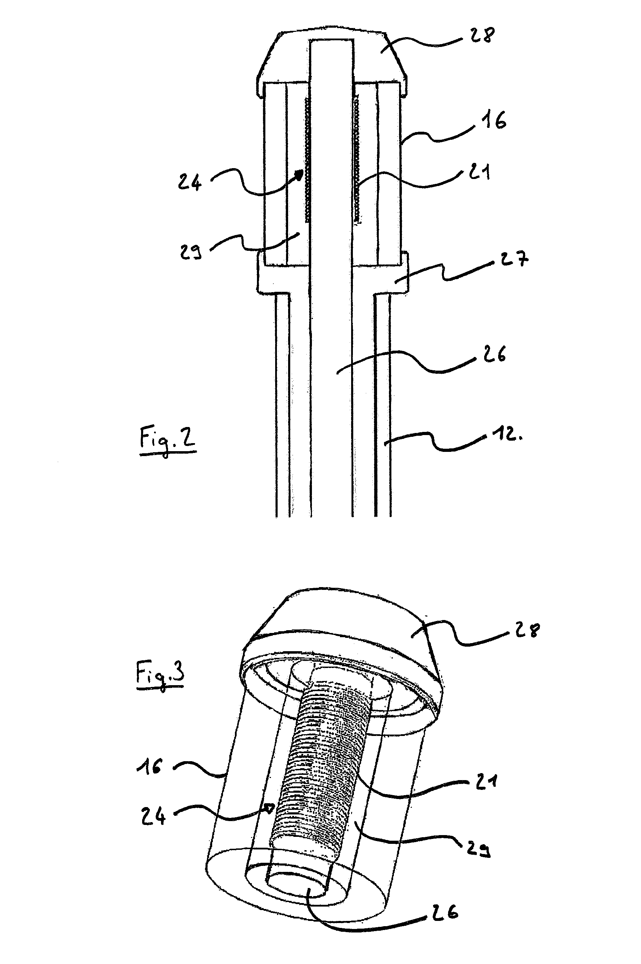

Dans un mode de réalisation particulièrement privilégié, chaque transducteur 16 est équipé d'un élément chauffant 24 tel que représenté en figures 2 et 3.

Chaque élément chauffant 24 comprend au moins un élément ferromagnétique 26 autour duquel est disposé au moins un des inducteurs 21. Le champ magnétique généré par l'inducteur 21 permet de chauffer l'élément ferromagnétique 26.

Des éléments chauffants peuvent être disposés à l'intérieur de toute partie du dispositif de mesure 10. Le chauffage du dispositif de mesure 10 se fait alors de manière indirecte.

Dans l'exemple des figures 2 et 3 deux embouts 27, 28 maintiennent l'élément chauffant 24 relativement au transducteur 16. De préférence l'élément chauffant 24 est choisi sensiblement cylindrique, et maintenu coaxial à un transducteur cylindrique 16 de sorte à maintenir un espace 29 entre l'élément chauffant 24 et le transducteur. L'espace 29 permet notamment le passage de fils électriques tels que les fils d'alimentation du transducteur 16.

L'embout 27 assure également le positionnement du transducteur 16 et de l'élément chauffant 24 relativement au bras 12. Si comme dans l'exemple de la figure 2 l'élément ferromagnétique 26 se prolonge dans le bras 12, un espace est maintenu entre l'élément ferromagnétique 26 et le bras 12, notamment pour permettre le passage de fils électriques. L'élément ferromagnétique 26 peut se prolonger suffisamment pour correspondre à un inducteur 21 placé à la surface externe du dispositif de mesure. L'élément ferromagnétique 26 peut alors être chauffé par l'inducteur 21 externe.

Ce type de mode de réalisation peut être privilégié lorsqu'au moins une partie du trident 11 est en matériau amagnétique : un inducteur 21 placé à la surface externe du dispositif de mesure 10 chauffe alors un élément ferromagnétique 26 placé à l'intérieur du dispositif de mesure 10.

Alternativement l'élément ferromagnétique 26 peut être choisi au moins partiellement creux pour permettre le passage de fils électriques ;

Les éléments chauffants 24 peuvent compléter le chauffage par inducteurs disposés sur le dispositif de mesure. Si le chauffage par éléments chauffants 24 est suffisant, les éléments chauffants 24 peuvent, de manière non représentée, remplacer au moins une partie des inducteurs 21 disposés sur le dispositif de mesure 10.

En particulier un élément chauffant 24 peut être disposé à l'intérieur de la pique 13. Si le chauffage de la pique 13 par élément chauffant 24 est suffisant, aucun inducteur 21 n'est disposé sur la pique.

Un élément chauffant 24 peut être disposé dans la tête 15 du corps 14.

Dans un autre mode de réalisation privilégié non représenté, un desdits éléments chauffants 24 est disposé à l'intérieur de chaque transducteur 16 et à l'intérieur de chaque dent 12.

Bien sûr, l'invention n'est pas limitée aux exemples qui viennent d'être décrits et de nombreux aménagements peuvent être apportés à ces exemples sans sortir du cadre de l'invention.

La température de chauffage peut être choisie différente sur différentes zones du dispositif de mesure 10.

Le trident 11 peut être choisi au moins partiellement en inox et/ou en inox ferromagnétique.

## Revendications

1. Dispositif de mesure (10) par onde acoustique comprenant un dispositif de chauffage pour éviter la formation de concrétions et/ou faire fondre les concrétions sur le dispositif de mesure (10) par onde acoustique, **caractérisé en ce que** le dispositif de mesure comprend un trident composé de trois dents (12) solidaires d'un corps (14), une extrémité libre de chaque dent portant un transducteur (16),
**en ce que** le trident est en matériau ferromagnétique,
et **en ce que** le dispositif de chauffage comprend un dispositif de chauffage par induction.

2. Dispositif de mesure (10) selon la revendication 1, **caractérisé en ce que** le dispositif de chauffage comprend au moins un inducteur de courant par magnétisme (21) prévu pour être alimenté par au moins un générateur de courant alternatif (22).

3. Dispositif de mesure (10) selon la revendication 2, **caractérisé en ce qu'**au moins un des inducteurs (21) est disposé sur au moins une partie d'une surface externe du dispositif de mesure.

4. Dispositif de mesure (10) selon la revendication 2 ou 3, **caractérisé en ce qu'**il comprend au moins un élément ferromagnétique (26) autour duquel est disposé au moins un des inducteurs (21) l'ensemble constituant un élément chauffant (24).

5. Dispositif de mesure (10) selon la revendication 4, **caractérisé en ce qu'**au moins un élément chauffant (24) est disposé à l'intérieur d'une partie dudit dispositif de mesure.

6. Dispositif de mesure (10) selon la revendication 4 ou 5, **caractérisé en ce qu'**il comprend au moins un transducteur (16) à l'intérieur duquel est disposé au moins un des éléments chauffants (24).

7. Dispositif de mesure (10) selon l'une des revendications 4 à 6, **caractérisé en ce qu'**il comprend une pique (13) à l'intérieur de laquelle est disposé au moins un élément chauffant (24).

8. Dispositif de mesure (10) selon l'une des revendications précédentes, **caractérisé en ce qu'**il comprend une pique (13) solidaire dudit corps (14).

9. Dispositif de mesure (10) selon l'une des revendications précédentes, **caractérisé en ce que** le dispositif de chauffage comprend un dispositif de régulation (23) incluant un dispositif de mesure de température et/ou un dispositif de mesure de la vitesse du flux.

10. Dispositif de mesure (10) selon la revendication 9, **caractérisé en ce que** le dispositif de régulation comprend un appareil électronique et/ou un ordinateur.

11. Dispositif de mesure (10) selon l'une des revendications 8 à 10, **caractérisé en ce que** sur chaque dent (12) est disposé un desdits inducteurs (21), et **en ce que** à l'intérieur de chaque transducteur (16) et à l'intérieur de la tête (15) est disposé un desdits éléments chauffants (24).

12. Dispositif de mesure (10) selon l'une des revendications 8 à 11, **caractérisé en ce qu'**à l'intérieur de chaque transducteur (16), à l'intérieur de chaque dent (12), et à l'intérieur de la tête (15) est disposé un élément chauffant (24).

13. Procédé pour éviter la formation de concrétions et/ou faire fondre les concrétions sur un dispositif de mesure (10) par onde acoustique, dans lequel on chauffe au moins une partie du dispositif de mesure, **caractérisé en ce que** le dispositif de mesure comprend trois dents (12) solidaires d'un corps (14), une extrémité libre de chaque dent portant un transducteur (16), **en ce que** ledit trident (11) est en matériau ferromagnétique, et **en ce que** l'on produit le chauffage par induction.

14. Procédé de chauffage selon la revendication 13, **caractérisé en ce que** la partie du dispositif est chauffée directement, par application d'un inducteur (21) de courant magnétique directement sur le dispositif de mesure, et/ou indirectement, par chauffage d'un élément (26, 24) disposé à l'intérieur du dispositif de mesure.

## Patentansprüche

1. Messvorrichtung (10) zur Messung mittels Schallwellen, enthaltend eine Heizvorrichtung, um an der Messvorrichtung (10) zur Messung mittels Schallwellen die Bildung von Konkretionen zu vermeiden und/oder das Schmelzen von Konkretionen hervorzurufen, **dadurch gekennzeichnet, dass** die Messvorrichtung einen Dreizack umfasst, der sich aus drei Zacken (12) zusammensetzt, die fest mit einem Körper (14) verbunden sind, wobei ein freies Ende eines jeden Zackens einen Wandler (16) trägt,
dass der Dreizack aus ferromagnetischem Material besteht
und dass die Heizvorrichtung eine Induktionsheizvorrichtung enthält.

2. Messvorrichtung (10) nach Anspruch 1, **dadurch gekennzeichnet, dass** die Heizvorrichtung zumindest einen magnetischen Strominduktor (21) aufweist, der dazu vorgesehen ist, über zumindest einen Wechselstromgenerator (22) gespeist zu werden.

3. Messvorrichtung (10) nach Anspruch 2, **dadurch gekennzeichnet, dass** zumindest einer der Induktoren (21) an zumindest einem Teil einer Außenfläche der Messvorrichtung angeordnet ist.

4. Messvorrichtung (10) nach Anspruch 2 oder 3, **dadurch gekennzeichnet, dass** sie zumindest ein ferromagnetisches Element (26) aufweist, um das herum zumindest einer der Induktoren (21) angeordnet ist, wobei diese Gruppe ein Heizelement (24) bildet.

5. Messvorrichtung (10) nach Anspruch 4, **dadurch gekennzeichnet, dass** zumindest ein Heizelement (24) innerhalb eines Teils der Messvorrichtung angeordnet ist.

6. Messvorrichtung (10) nach Anspruch 4 oder 5, **dadurch gekennzeichnet, dass** sie zumindest einen Wandler (16) aufweist, innerhalb dessen zumindest eines der Heizelemente (24) angeordnet ist.

7. Messvorrichtung (10) nach einem der Ansprüche 4 bis 6, **dadurch gekennzeichnet, dass** sie einen Spieß (13) aufweist, innerhalb dessen zumindest ein Heizelement (24) angeordnet ist.

8. Messvorrichtung (10) nach einem der vorangehenden Ansprüche, **dadurch gekennzeichnet, dass** sie einen Spieß (13) aufweist, der fest mit dem Körper (14) verbunden ist.

9. Messvorrichtung (10) nach einem der vorangehenden Ansprüche, **dadurch gekennzeichnet, dass** die Heizvorrichtung eine Regelvorrichtung (23) aufweist, die eine Vorrichtung zum Messen der Temperatur und/oder eine Vorrichtung zum Messen der Durchflussgeschwindigkeit umfasst.

10. Messvorrichtung (10) nach Anspruch 9, **dadurch gekennzeichnet, dass** die Regelvorrichtung ein elektronisches Gerät und/oder einen Computer aufweist.

11. Messvorrichtung (10) nach einem der Ansprüche 8 bis 10, **dadurch gekennzeichnet, dass** an jedem Zacken (12) einer der Induktoren (21) angeordnet ist und dass innerhalb eines jeden Wandlers (16) und innerhalb des Kopfes (15) eines der Heizelemente (24) angeordnet ist.

12. Messvorrichtung (10) nach einem der Ansprüche 8 bis 11, **dadurch gekennzeichnet, dass** innerhalb eines jeden Wandlers (16), innerhalb eines jeden Zackens (12) und innerhalb des Kopfes (15) ein Heizelement (24) angeordnet ist.

13. Verfahren zum Vermeiden der Bildung von Konkretionen und/oder zum Schmelzen von Konkretionen an einer Messvorrichtung (10) zur Messung mittels Schallwellen, wobei zumindest ein Teil der Messvorrichtung erhitzt wird, **dadurch gekennzeichnet, dass** die Messvorrichtung drei Zacken (12) enthält, die fest mit einem Körper (14) verbunden sind, wobei ein freies Ende eines jeden Zackens einen Wandler (16) trägt, dass der Dreizack (11) aus ferromagnetischem Material besteht und dass das Heizen durch Induktion erfolgt.

14. Verfahren zum Heizen nach Anspruch 13, **dadurch gekennzeichnet, dass** der Teil der Vorrichtung direkt mittels eines magnetischen Strominduktors (21), der direkt auf die Messvorrichtung und/oder indirekt durch Erhitzen eines innerhalb der Messvorrichtung angeordneten Elements (26, 24) wirkt, erhitzt wird.

## Claims

1. Measuring device (10) using acoustic waves, comprising a heating device for preventing the formation of concretions and/or melting the concretions on the measuring device (10) using acoustic waves, **characterized in that** the measuring device comprises a trident composed of three prongs (12) firmly fixed to a body (14), a free end of each prong bearing a transducer (16),
**in that** the trident is made from ferromagnetic material,
and **in that** the heating device comprises an induction heating device.

2. Measuring device (10) according to claim 1, **characterized in that** the heating device comprises at least one magnetic current inductor (21), intended to be supplied by at least one generator of alternating current (22).

3. Measuring device (10) according to claim 2, **characterized in that** at least one of the inductors (21) is arranged on at least a portion of an outer surface of the measuring device.

4. Measuring device (10) according to claim 2 or 3, **characterized in that** it comprises at least one ferromagnetic element (26) around which at least one of the inductors (21) is arranged, the assembly constituting a heating element (24).

5. Measuring device (10) according to claim 4, **characterized in that** at least one heating element (24) is arranged inside a portion of said measuring device.

6. Measuring device (10) according to claim 4 or 5, **characterized in that** it comprises at least one transducer (16) inside which at least one of the heating elements (24) is arranged.

7. Measuring device (10) according to one of claims 4 to 6, **characterized in that** it comprises a spike (13) inside which at least one heating element (24) is arranged.

8. Measuring device (10) according to one of the preceding claims, **characterized in that** it comprises a spike (13) firmly fixed to said body (14).

9. Measuring device (10) according to one of the preceding claims, **characterized in that** the heating device comprises a regulation device (23) including a temperature measuring device and/or a flow speed measuring device.

10. Measuring device (10) according to claim 9, **characterized in that** the regulation device comprises an electronic device and/or a computer.

11. Measuring device (10) according to one of claims 8 to 10, **characterized in that** on each prong (12) one of said inductors (21) is arranged, and **in that** inside each transducer (16) and inside the head (15) one of said heating elements (24) is arranged.

12. Measuring device (10) according to one of claims 8 to 11, **characterized in that** inside each transducer (16), inside each prong (12), and inside the head (15) a heating element (24) is arranged.

13. Method for preventing the formation of concretions and/or melting the concretions on a measuring device (10) using acoustic waves, in which at least a portion of the measuring device is heated, **characterized in that** the measuring device comprises three prongs (12) firmly fixed to a body (14), a free end of each prong bearing a transducer (16), **in that** said trident (11) is made from ferromagnetic material, and **in that** heating is produced by induction.

14. Heating method according to claim 13, **characterized in that** the portion of the device is heated directly, by applying a magnetic current inductor (21) directly onto the measuring device, and/or indirectly, by heating an element (26, 24) arranged inside the measuring device.
